(19) Europäisches Patentamt
European Patent Office
Office européen des brevets

(11) **EP 2 899 929 A1**

(12) **EUROPEAN PATENT APPLICATION**

(43) Date of publication:
**29.07.2015 Bulletin 2015/31**

(51) Int Cl.:
*H04L 12/707* (2013.01)    *H04L 12/801* (2013.01)

(21) Application number: **15152562.3**

(22) Date of filing: **26.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.01.2014  KR 20140010912**

(71) Applicants:
• **Samsung Electronics Co., Ltd**
  **Gyeonggi-do 443-742 (KR)**
• **SNU R&DB Foundation**
  **Seoul 151-742 (KR)**

(72) Inventors:
• **Bahk, Saewoong**
  **Seoul (KR)**
• **Park, Se-Yong**
  **Seoul (KR)**
• **Moon, Sang-Jun**
  **Gyeonggi-do (KR)**

(74) Representative: **Nederlandsch Octrooibureau**
**P.O. Box 29720**
**2502 LS The Hague (NL)**

(54) **Method and apparatus for traffic distribution control using Multi-Path Transport Control Protocol in wireless heterogeneous networks**

(57)    A method and apparatus for distribution control of traffic when providing a real-time application program service using Multipath Transport Control Protocol (MPTCP) in a heterogeneous wireless network environment are provided. The method of operating a transmitter in a heterogeneous wireless network includes determining a transmission rate of each of the subflows corresponding to each of the networks, and then transmitting traffic through those subflows. The transmission rate for each subflow is determined in consideration of (i) the transmission rate per unit time from the upper layer to the transport control protocol (TCP) layer and (ii) the capacity in which a bottleneck link can accept.

```
           ┌─────────┐
           │  START  │
           └────┬────┘
                ▼
    ┌───────────────────────┐
    │ ESTIMATE TRAFFIC RATE │──S110
    │ AND CAPACITY OF       │
    │ SUBFLOWS              │
    └───────────┬───────────┘
                ▼
    ┌───────────────────────┐
    │ CALCULATE MAXIMUM     │──S120
    │ TRANSMISSION RATE OF  │
    │ EACH SUBFLOW          │
    └───────────┬───────────┘
                ▼
    ┌───────────────────────┐
    │ ALLOCATE TRANSMISSION │
    │ RATE IN ORDER IN WHICH│──S130
    │ NETWORK COST IS SMALL │
    │ UNTIL SEND BUFFER     │
    │ DELAY BECOMES SMALLER │
    │ THAN THRESHOLD VALUE  │
    └───────────┬───────────┘
                ▼
           ┌─────────┐
           │   END   │
           └─────────┘
```

FIG.4

EP 2 899 929 A1

Description

BACKGROUND OF THE INVENTION

1. Field of the Invention

The present invention generally relates to a heterogeneous wireless network.

2. Description of the Related Art

Recently, wireless devices such as smart phones and tablet Personal Computers (PCs) have been developed to provide a plurality of network interfaces. Accordingly, for convenience, users may select and use several networks at the same time, such as a cellular network (e.g., 3G, 4G Long Term Evolution (LTE)), a Wireless Local Area Network (WLAN), and a Wireless Fidelity (Wi-Fi) network.

For such a heterogeneous wireless network environment, the Internet Engineering Task Force (IETF) has suggested the Multi-Path Transport Control Protocol (MPTCP) to improve data transmission rate and reliability in such a multipath environment. The MPTCP operates on the widely used Transmission Control Protocol (TCP) layer, and simultaneously opens and controls several TCP sessions, thereby providing high transmission rates and reliability in a dynamically changing heterogeneous wireless network environment.

SUMMARY OF THE INVENTION

The present invention has been made to address at least the above-mentioned problems and/or disadvantages and to provide at least the advantages described below. Accordingly, an aspect of the present invention is to provide a method and apparatus for providing a real-time application program service using MPTCP in a heterogeneous wireless network environment.

Another aspect of the present invention is to provide a method and apparatus for distribution control of traffic when providing a real-time application program service using MPTCP in a heterogeneous wireless network environment.

Another aspect of the present invention is to provide a method and apparatus for minimizing end-to-end delay when providing a real-time application program service using MPTCP in a heterogeneous wireless network environment.

Another aspect of the present invention is to provide a method and apparatus for reducing reordering delay in the receiving buffer when providing a real-time application program service using MPTCP in a heterogeneous wireless network environment.

In accordance with an aspect of the present invention, a method of operating a transmitter in a heterogeneous wireless network is provided, the method including determining a transmission rate of each of a plurality of subflows, where each subflow corresponds to a wireless network interface; and transmitting traffic through the subflows, wherein the transmission rate of each of the subflows is determined in consideration of (i) a transmission rate per unit time from an upper layer to a transport control protocol (TCP) layer and (ii) a capacity of a link to accept a bottleneck, and the transmission rates are determined starting with the subflow having the highest priority of the plurality of subflows.

In accordance with another aspect of the present invention, an apparatus of a transmitter in a heterogeneous wireless network is provided, the apparatus including a plurality of network interfaces, each network interface transmitting a subflow corresponding to a wireless network; and a controller that determines a transmission rate of each of the subflows and controls the plurality of network interfaces to transmit traffic via the subflows according to the determined transmission rates, wherein the controller determines the transmission rate of each of the subflows in consideration of (i) a transmission rate per unit time from an upper layer to a transport control protocol (TCP) layer and (ii) a capacity of a link to accept a bottleneck, and the transmission rates are determined starting with the subflow having the highest priority of the plurality of subflows.

BRIEF DESCRIPTION OF THE DRAWINGS

The above and other aspects, features and advantages of certain embodiments of the present invention will be more apparent from the following detailed description taken in conjunction with the accompanying drawings, in which:

FIG. 1 is a block diagram illustrating a configuration of a transmitter and a receiver using MPTCP in a heterogeneous wireless network;
FIG. 2 is a block diagram illustrating a configuration of a transmitter having heterogeneous wireless network interfaces according to an embodiment of the present invention;
FIG. 3 is a diagram illustrating a delay estimation operation by an end-to-end delay estimator according to an embodiment of the present invention;

FIG. 4 is a flowchart schematically illustrating a traffic distribution control operation according to an embodiment of the present invention; and

FIG. 5 is a flowchart specifically illustrating a traffic distribution control operation according to an embodiment of the present invention.

## DETAILED DESCRIPTION OF EMBODIMENTS OF THE PRESENT INVENTION

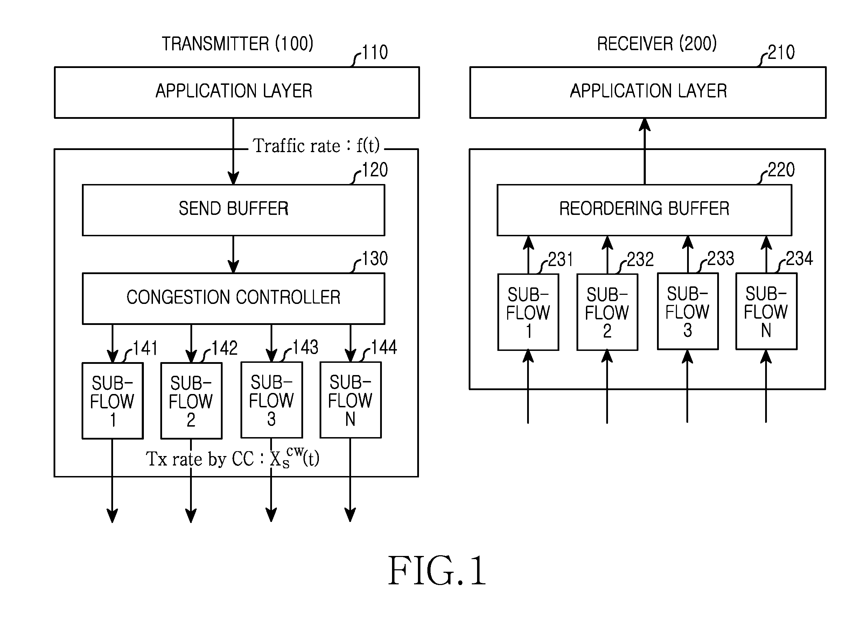

In this specification, FIGS. 1 to 5 are used for illustrating principles of the present invention and should not be interpreted as limiting the scope of the present invention. A person of ordinary skill in the art would understand that embodiments of the present invention may be implemented in any appropriately disposed heterogeneous wireless communication system.

Embodiments of the present invention to be described in the following description relate to using the MultiPath Transport Control Protocol (MPTCP, RFC 6824, which is hereby incorporated by reference in its entirety) in a heterogeneous wireless network environment. In the heterogeneous wireless network environment, a user downloads multimedia contents (e.g., real-time application program, contents for a streaming service) from a server and reproduces the multimedia contents through a terminal. For example, the terminal may access a server on the Internet through an LTE network or through a WLAN.

FIG. 1 is a block diagram illustrating a configuration of a server/transmitter that provides a service using MPTCP to a user terminal/receiver in a heterogeneous wireless network.

Referring to FIG. 1, the heterogeneous wireless network includes a server and a user terminal, reference numeral 100 indicates an MPTCP transmitter as the server, reference numeral 200 indicates an MPTCP receiver as the user terminal. The transmitter 100 and the receiver 200 are connected through a plurality of different network interfaces (e.g., LTE interface, WiFi interface, etc.). The transmitter 100 and the receiver 200 each include an application layer, a transport layer, a network layer, a data link layer, and a physical layer. However, for convenience, the transmitter 100 and the receiver 200 in FIG. 1 only show their application layers 110 and 210, respectively and the components in their transport layers.

The transmitter 100 includes an application layer (or an application program) 110 and, as a transport layer, a send buffer 120, a congestion controller 130, and a plurality of subflows 141-144. The send buffer 120 stores traffic (e.g., packets) for transmission. For example, the send buffer 120 may store traffic for a Voice over Internet Protocol (VoIP) connection, a real-time application such as an audiovisual communication, or a live streaming service such as YouTube. When transmitting traffic stored at the send buffer 120 through a plurality of subflows 141-144 (i.e., subflows 1, 2, 3, ..., N), the congestion controller 130 performs congestion control on the transmission traffic. The plurality of subflows 141-144 correspond to a plurality of different network interfaces (not shown) (e.g., LTE interface, WiFi interface) and transmit traffic stored at the send buffer 120 over their corresponding networks according to a transmission rate allocated by the congestion controller 130.

The receiver 200 includes an application layer (or an application program) 210 and a reordering buffer 220 and a plurality of (e.g., the N number) subflows 231-234 as a transport layer. The plurality of subflows 231-234 correspond to a plurality of different network interfaces and receive traffic transmitted through the corresponding networks. The reordering buffer 220 reorders and stores traffic received through the plurality of subflows 231-234. The application layer 210 reads and reproduces traffic reordered by the reordering buffer 220. For example, the application layer 210 reproduces content provided from the server 100 through a display or a speaker (not shown).

In FIG. 1, MPTCP is the Transport Control Protocol (TCP) for the plurality of wireless network interfaces (e.g., WiFi, 3G, and LTE) and simultaneously opens a plurality of TCP sessions or MPTCP subflows and controls the transmission and reception of traffic therein. When TCP sessions are connected and used by the network interfaces, MPTCP can integrate and use the bandwidth from each of their respective wireless networks.

When MPTCP is used for a VoIP, a real-time application program such as audiovisual communication, or a live streaming service such as YouTube, there is a problem in that the delay performance from the server or transmitter 100 to the receiver 200 is seriously deteriorated, which presently largely restricts the wide use of MPTCP. The deterioration of delay performance may be analyzed in two aspects: bufferbloat and reordering.

Transmitters and receivers in present wireless networks use larger and larger buffers. These large buffers are required in order to receive a change of various capacities in wireless terminals, but it is also the major cause that deteriorates delay performance in loss-based congestion control techniques, such as the widely-used TCP. This is because even though the transmission rate in the server 100 almost approaches the capacity of a wireless terminal, it takes a long time for a loss to be discovered due to the large buffer size. Therefore, unnecessary additional network delay from a minimum of several tens of seconds (ms) to a maximum of several seconds occurs. Such a bufferbloat problem also occurs in MPTCP.

A plurality of subflows having different paths arrive and are again sequenced at the reordering buffer 220 of the receiver 200. This is an essential element for reliable communication. Accordingly, the entire end-to-end delay is adjusted to the subflow having largest delay among several paths. Therefore, when one path suffers bufferbloat, the other paths also have the same delay and thus an existing bufferbloat problem is aggravated.

In an embodiment of the present invention, the unnecessary delay time described above is minimized, because the MPTCP allocates a transmission rate to each subflow in consideration of a varying network state, i.e., where each path is variably changing and the transmission rate of the application programs vary (e.g., Variable Bit Rate (VBR) traffic rate).

The major symbols used when describing an embodiment of the present invention are defined in the following Table 1.

**TABLE 1**

| Notation | Definition |
|---|---|
| f | Traffic rate from an application layer |
| $x_s^{cw}$ | Transmission rate of subflow s by congestion control |
| $x_s$ | Transmission rate of subflow s by traffic distribution control |
| $d^{e\text{-}e}$ | End-to-end delay from the server to the receiver |
| $d^{send}$ | Delay in the send buffer of the server |
| $d_s^{net}$ | For subflow s, packet delay caused by the network |
| $d_s^{re}$ | For subflow s, packet delay due to reordering at the receiver |
| $d^{loss}$ | In a network, the delay from when a loss of a packet occurs until recovering the lost packet |
| $w_s$ | Transmission window size of subflow s by a congestion control ($w_s = x_s \cdot RTT_s$) |
| $c_s$ | Bottleneck link capacity of subflow s |
| $RTT_s$ | Round trip time of subflow s |
| b | Quantity of backlogged packets in the send buffer of the server |

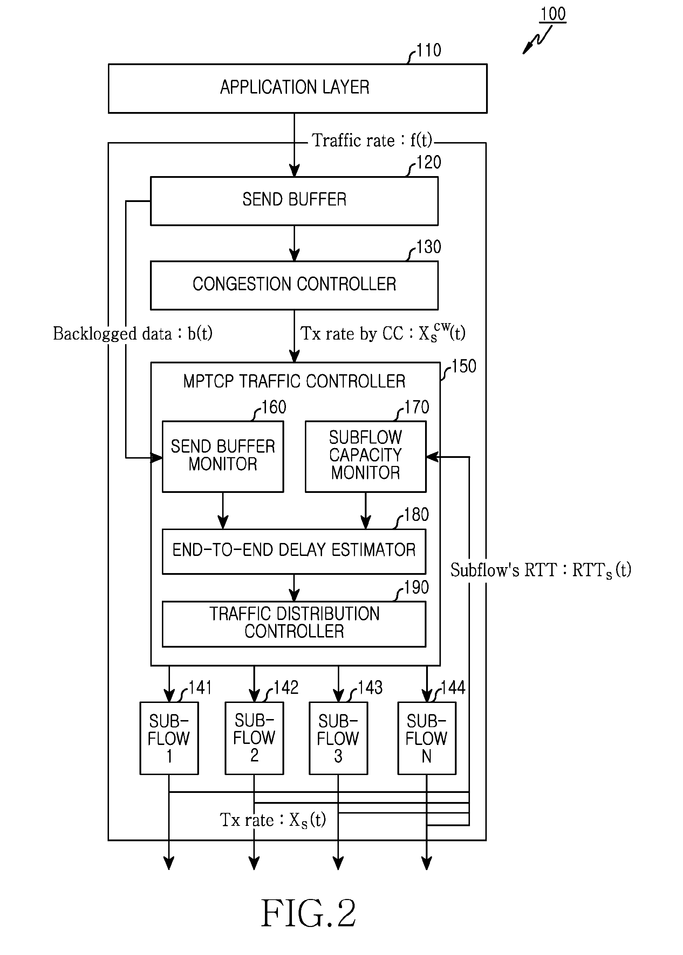

FIG. 2 is a block diagram illustrating a configuration of a transmitter 100 of a heterogeneous wireless network according to an embodiment of the present invention. Such a configuration may be implemented in a server of a heterogeneous wireless network and corresponds to the transmitter 100 of FIG. 1.

Referring to FIG. 2, the transmitter 100 includes an application layer 110, a send buffer 120, a congestion controller 130, an MPTCP traffic controller 150, and a plurality of subflows 141-144 (i.e., subflows 1 through N). The MPTCP traffic controller 150 determines a transmission rate to be allocated to each subflow in consideration of a network state in which each path and the application program transmission rate is variably changing. The MPTCP traffic controller 150 includes a send buffer monitor 160, a subflow capacity monitor 170, an end-to-end delay estimator 180, and a traffic distribution controller 190.

The send buffer monitor 160 periodically monitors a quantity of backlogged data stacked in the send buffer 120 and estimates a traffic rate of the application layer 110. When a monitoring cycle is Δt and a quantity of kth monitored backlogged data is $b_k$, an estimated traffic rate $\widetilde{f}_k$ is obtained by Equation (1).

$$\widetilde{f}_k = \frac{b_k - b_{k-1}}{\Delta t} + \sum_{s \in S} x_{s,k-1} \qquad \dots (1)$$

where $x_{s,k-1}$ is the transmission rate in the (k-1)th time slot of subflow s.

The subflow capacity monitor 170 estimates the bottleneck link capacity $c_s$ of subflow s by measuring $RTT_s$ at every monitoring cycle Δt. The estimated capacity $\widetilde{c}_{s,k+1}$ of subflow s in the (k+1)th time slot is obtained by Equation (2).

$$\widetilde{c}_{s,k+1} = c_{s,k} = \frac{x_{s,k} RTT_{s,k}}{RTT_{s,k} - RTT_s^{min}} \qquad \dots (2)$$

where $\tilde{c}_{s,k+1}$ is the capacity value estimated based on the RTT value ($RTT_{s,k}$) measured in the kth time slot, where it is assumed that the capacity does not change over $\Delta t$.

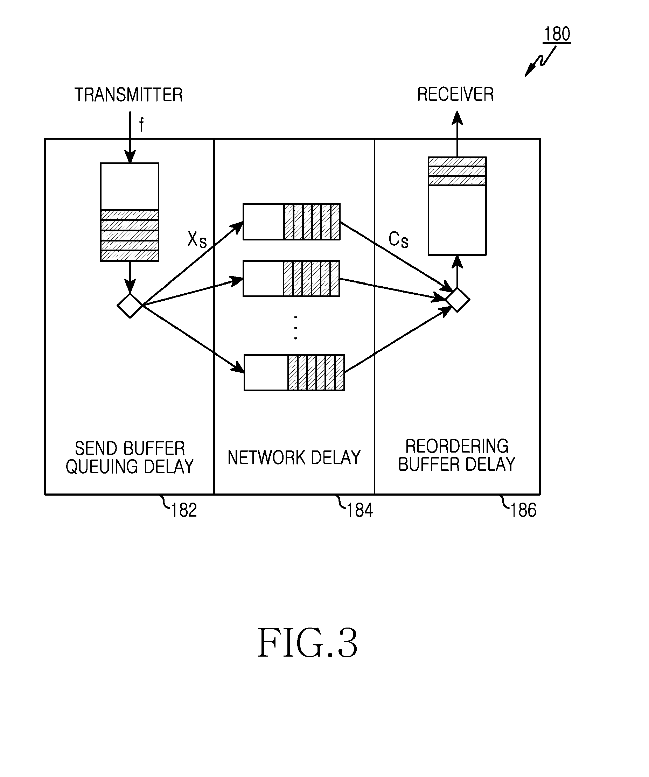

In order to estimate end-to-end delay, the end-to-end delay estimator 180 analyzes delay with three elements and estimates an expected value thereof, as shown in FIG. 3.

FIG. 3 is a diagram illustrating a delay estimation operation by the end-to-end delay estimator 180 according to an embodiment of the present invention. As shown in FIG. 3, the end-to-end delay can be analyzed as the sum of three different delays.

Referring to FIG. 3, the end-to-end delay estimator 180 estimates send buffer queuing delay 182, network delay 184, and reordering buffer delay 186.

The send buffer queuing delay ($d^{send}$) 182 is the delay occurring in the send buffer 120 due to the difference between the traffic rate f of the application layer 110 and the sum $\sum_{s\in S} x\_s$ of subflow transmission rates. Here, when it is assumed that f and $x_s$ follow the Poisson distribution, the expected value of $d^{send}$ is obtained by Equation (3).

$$E[d^{send}(X)] = \frac{1}{\sum_{s\in S} x_s - f} \qquad \ldots (3)$$

The round trip time $RTT_s$ of subflow s may be estimated by Equation (4).

$$\overline{E[RTT'_s]} = RTT_s^{min} + \frac{w_s + (M_s - 1)}{c_s} \qquad \ldots (4)$$

where $M_s$ is the number of buffers through which a packet passes from the server 100 to the receiver 200, and this value may be estimated through a measured RTT value when $w_s$ is 0.

Thereby, representing the expected value of network delay $\left(d_s^{net}\right)$ 184 of each subflow as an equation of transmission rate $x_s$, the expected value is obtained by Equation (5).

$$E[d_s^{net}(x_s)] \le E[RTT'\_s(x_s)/2] = \frac{M_s - 1 + c_s RTT_s^{min}}{2(c_s - x_s)} \qquad \ldots (5)$$

The reordering buffer delay 186 in the reordering buffer 220 of the receiver 200 may be roughly divided into two delays. The first delay occurs in the process of sequencing the packets which were transmitted through different paths. As described above, because the overall delay is adjusted to the subflow having the largest network delay, the reordering delay may be defined by Equation (6).

$$E[d_s^{re}(x_s)] := \max_{i\in S}\{E[d_i^{net}(x_i)]\} - E[d_s^{net}(x_s)] \qquad \ldots (6)$$

The second delay is the delay taken from losing a packet until recovering the lost packet. The delay may be represented by Equation (7) where $p_s^{loss}$ is the loss rate of subflow s.

$$\overline{E[d^{loss}(X)]} = \sum_s RTT_s \cdot p_s^{loss} \qquad \ldots (7)$$

As described above, because the several delays overlap, the expected value of the end-to-end delay may be represented by Equation (8).

$$E[d^{e-e}(X)] <= \frac{1}{\sum_{s\in S} x_s - f} + \max_{s\in S}\left\{\frac{M_s - 1 + c_s RTT_s^{min}}{2(c_s - x_s)}\right\} + \sum_s \frac{M_s - 1}{c_s - x_s} p_s^{loss} \qquad \ldots (8)$$

In Equation 8, the end-to-end delay is represented as a function of the estimated capacity $c_s$ and the transmission rate $x_s$ of each subflow. More specifically, the end-to-end delay has a complex function relationship with $x_s$, is inversely proportional to the entire transmission rate ($\sum_{s \in S} x_s$), and is proportional to the maximum transmission rate ($max_{s \in S} x_s$). According to an embodiment of the present invention, such a delay estimation technique suggests using a traffic distribution control technique satisfying Equation (9).

$$\min_{X \geq 0} \quad C(\mathbf{x}(t))$$

$$E[d^{e-e}(\mathbf{x}(t))] \leq d_{req} \qquad \dots (9)$$

Thus, for example, the traffic distribution controller 190 would control the end-to-end delay $E[d^{e-e}(X)]$ to be less than or equal to the minimum delay $d_{req}$ which a service requires, while minimizing the network cost $C(X(t))$ by reflecting a wireless network in which network interface costs are different. In an embodiment, because a WiFi network is efficient in a battery use amount or a cost (or fee), the WiFi network may have a network cost lower than that of an LTE network.

Referring to Equation (9), because the bottleneck link capacity $c_s$ of subflow s and the transmission rate $x_s$ are time-varying values, it is impossible to search for an optimal transmission rate satisfying Equation (9) at one instant of time. Instead, according to an embodiment of the present invention, the traffic distribution controller 190 searches for a transmission rate satisfying Equation (10) according to the same constant cycle $\Delta t$ as that used in the send buffer monitor 160 or the subflow capacity monitor 170.

$$\min_{X \geq 0} \quad C(\mathbf{x}_k)$$

$$s.t. \quad \mathbf{x}_k \leq \mathbf{x}_k^{cw}$$

$$E[\tilde{d}_s^{net}(\mathbf{x}_k)] \leq d_{thr}^{net}$$

$$E[\tilde{d}^{send}(\mathbf{x}_k)] \leq d_{thr}^{send} \qquad \dots (10)$$

$$d_{thr}^{net} + d_{thr}^{send} \leq d_{req}$$

According to Equation (10), to overcome non-convexity of modeling of end-to-end delay, the traffic distribution controller 190 controls the network delay 184 and the send buffer queuing delay 182 to be limited to threshold values $d_{thr}^{net}, d_{thr}^{send}$, respectively, instead of limiting end-to-end delay, as in Equation (9).

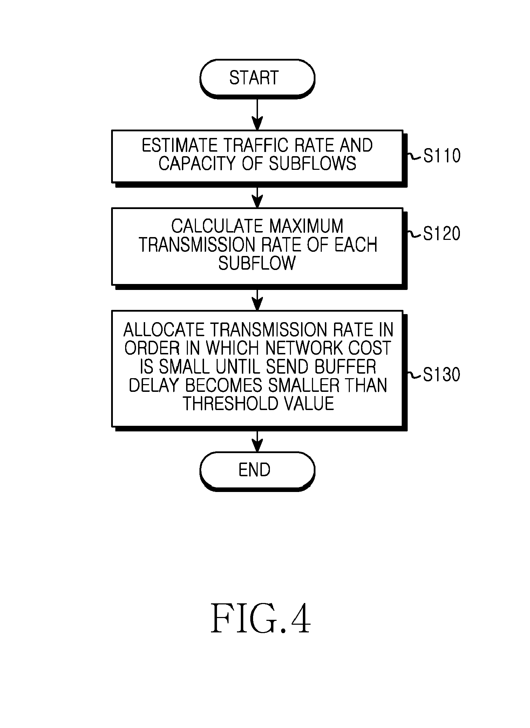

In order to find transmission rate $x_s$ satisfying Equation (10), three steps are repeated in each time slot, as shown in FIG. 4.

FIG. 4 is a flowchart schematically illustrating a traffic distribution control operation according to an embodiment of the present invention. Such processing flow may be performed by the MPTCP traffic controller 150 of FIG. 2.

Referring to FIG. 4, the send buffer monitor 160 and the subflow capacity monitor 170 of FIG. 2 estimate the traffic rate $\tilde{f}_k$ and the capacity $\tilde{c}_{s,k}$ of a bottleneck link of subflow s, respectively, in step S110.

The traffic distribution controller 190 of FIG. 2 calculates the maximum transmission rate $\overline{x}_s$ of each subflow satisfying $d_{thr}^{net}$ in step S120. The maximum transmission rate $\overline{x}_s$ is calculated by Equation (11).

$$\overline{x}_s = \tilde{c}_{s,k} - \frac{M_s - 1 + \tilde{c}_{s,k} \cdot RTT_s^{min}}{2 \cdot d_{thr}^{net}} \quad . \qquad \dots (11)$$

The traffic distribution controller 190 of FIG. 2 greedy allocates a transmission rate $x_s$ of each subflow in order in which a network cost $C(X(t))$ is small. The traffic distribution controller 190 performs the allocation until the send buffer delay according to a value of $(\sum_{s \in S} x_s)$ becomes smaller than a threshold value $d_{thr}^{send}$, as in Equation (12) in step S130.

$$\left\lfloor \sum_{s \in S} x_{s,k} \right\rfloor = \widetilde{f}_k + 1/d_{thr}^{send} \qquad (12)$$

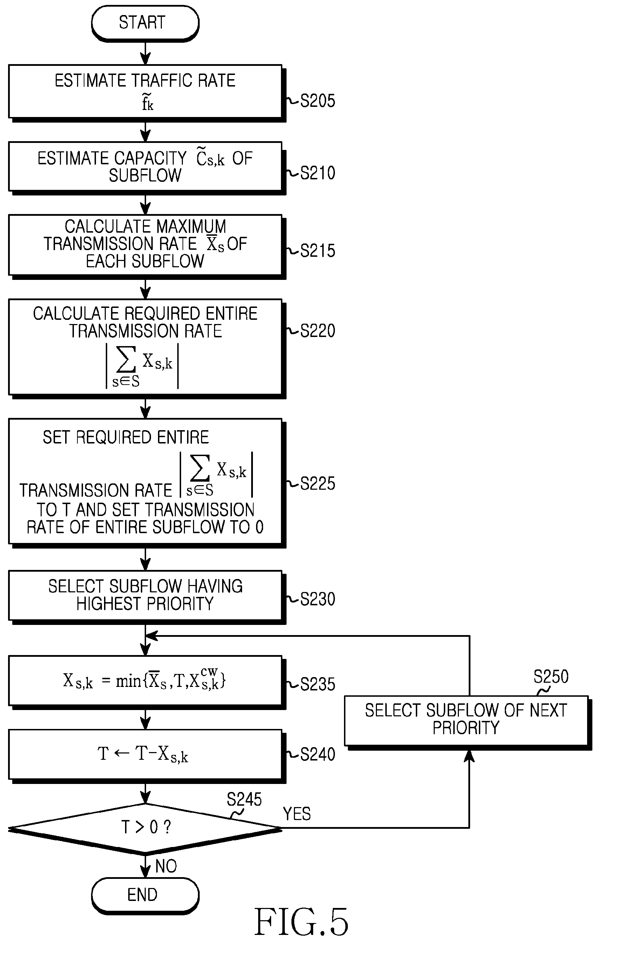

FIG. 5 is a flowchart specifically illustrating a traffic distribution control operation according to an embodiment of the present invention. Such processing flow may be performed by the MPTCP traffic controller 150 of FIG. 2.

Referring to FIG. 5, the send buffer monitor 160 of FIG. 2 estimates the traffic rate $\widetilde{f}_k$ of the application layer 110 of FIG. 2 in step S205. The subflow capacity monitor 170 estimates the capacity $\tilde{c}_{s,k}$ of a bottleneck link of subflow s in step S210.

In an embodiment, traffic rate $\widetilde{f}_k$ is calculated by Equation (1), and capacity $\tilde{c}_{s,k}$ of a bottleneck link of subflow s is calculated by Equation (2).

In step S215, the traffic distribution controller 190 calculates the maximum transmission rate $\overline{x}_s$ of each subflow satisfying a threshold value $d_{thr}^{net}$ described in the third condition $\mathrm{E}[\tilde{d}_s^{net}(\mathbf{x}_k)] \le d_{thr}^{net}$ of Equation (10). In an embodiment, the maximum transmission rate $\overline{x}_s$ is calculated by Equation (11).

The traffic distribution controller 190 calculates the required entire transmission rate $\left\lfloor \sum_{s \in S} x_{s,k} \right\rfloor$ in step S220.

In an embodiment, the required entire Transmission rate $\left\lfloor \sum_{s \in S} x_{s,k} \right\rfloor$ is calculated by Equation (12). In step S225, the traffic distribution controller 190 sets the required entire transmission rate $\left\lfloor \sum_{s \in S} x_{s,k} \right\rfloor$ to T and sets a transmission rate of entire subflow to 0.

In step S230. the traffic distribution controller 190 selects the subflow having the highest priority among the plurality of subflows. In an embodiment, the traffic distribution controller 190 selects the subflow having the smallest network cost among the plurality of subflows as the subflow having the highest priority.

In step S235, the traffic distribution controller 190 selects the minimum value among the maximum transmission rate $\overline{x}_s$, the required entire transmission rate T, and the transmission rate $x_{s,k}^{cw}$ by a congestion control. This is to satisfy the second condition $\mathbf{X}_k \le \mathbf{X}_k^{cw}$ in Equation (10).

In step S240, the traffic distribution controller 190 subtracts the selected transmission rate $x_{s,k}$ from the current value of the required entire transmission rate T to obtain a new value for T .

In step S245, the traffic distribution controller 190 determines whether the new value of T is greater than 0. If T is not greater than 0, the traffic distribution controller 190 terminates flow. If T is greater than 0, the fourth condition

$\mathrm{E}[\tilde{d}^{send}(\mathbf{x}_k)] \le d_{thr}^{send}$ of Equation (10) is not satisfied, and thus the process continues to allocate transmission rates to the remaining subflows to which transmission rates have not been allocated. In step S250, the traffic distribution controller 190 selects the subflow of the next highest priority among the plurality of unallocated subflows and the process repeats, starting at step S235. In an embodiment, the traffic distribution controller 190 selects the subflow having an $x_s$ of 0 and the smallest network cost $a_s$ as the subflow of the next highest priority. That is, the traffic distribution controller 190 selects the unallocated subflow for which the network cost $a_s$ is smallest and step S235 is performed for that selected subflow.

The operations in steps S220 to S250 corresponds to step S130 of FIG. 4. That is, the traffic distribution controller 190 greedy allocates a transmission rate $x_s$ of each subflow in order in which a network cost $C(X(t))$ issmall until the send buffer delay according to the value $(\sum_{s \in S} x_s)$ becomes smaller than the threshold value $d_{thr}^{send}$, as in Equation (12).

The operation by which the traffic distribution controller 190 allocates the transmission rate $x_s$ of each subflow may be summarized as follows.

(Step 1) The traffic distribution controller 190 estimates $\widetilde{c_{s,k}}$ of each subflow. $\widetilde{c_{s,k}}$ , which may be calculated using Equation (2), is an estimated value based on the RTT value, and represents the capacity in which a bottleneck link can accept. Further, the traffic distribution controller 190 estimates $\widetilde{f_k}$ using Equation (1). This is a transmission rate per unit time from an upper layer to the TCP layer.

(Step 2) The traffic distribution controller 190 obtains the maximum transmission rate per subflow which satisfies the third condition of Equation (10) based on the estimated $\widetilde{c_{s,k}}$. This value may be calculated according to Equation (11).

(Step 3) The traffic distribution controller 190 obtains the minimum transmission rate satisfying the fourth condition of Equation (10) using the estimated $\widetilde{f_k}$. It is obtained by using Equation (3) and Equation (12).

(Step 4) In order to minimize cost, the traffic distribution controller 190 sequentially (in the order of smallest to largest $a_s$) allocates the maximum transmission rate per subflow, starting from the subflow having the smallest cost, until the following two conditions are satisfied. By this process, the traffic distribution controller 190 performs so-called greedy allocation.

(Condition 1) The sum of transmission rates has a value larger than that of the minimum transmission rate of Equation (12).

(Condition 2) The maximum transmission rate is allocated to entire subflows.

As described above, in embodiments of the present invention, when providing a real-time application program service using MPTCP in a heterogeneous wireless network environment, end-to-end delay can be minimized by determining the transmission rate of each sub flow so as to minimize a value of network delay of subflow of both sides of a transmitter and a receiver.

Further, in embodiments of the present invention, by quickly recovering from the loss of a packet due to low network delay, reordering delay occurring in a buffer of the receiving side can be reduced.

Operations according to an embodiment of the present invention may be implemented by a single controller. In such a case, a program command for performing operation implemented with various computers may be recorded in a non-transitory computer readable medium. The computer readable medium may include, individually or in combination, a program command, a data file, and a data structure. The program command may be especially designed and configured for the present invention or may be known and used to a person of ordinary skill in the art. The computer readable recording medium may include, for example, a magnetic medium such as a hard disk, a floppy disk, and a magnetic tape, an optical recording medium such as a Compact Disk Read-Only Memory (CD-ROM) or a Digital Versatile Disk (DVD), a magnetic-optical medium such as a floptical disk, and a hardware device specially configured to store and perform a program command such as a ROM, a Random-Access Memory (RAM), and a flash memory. The program command may include, for example, a high-level language code that may be executed by a computer using an interpreter as well as a machine language code formed by a compiler. When a portion or the entire of a base station or a relay described in the present invention is implemented with a computer program, a computer readable recording medium that stores the computer program is included in the present invention.

Although embodiments of the present invention have been described in detail hereinabove, it should be clearly understood that many variations and modifications of the basic inventive concepts herein described, which may appear to those skilled in the art, will still fall within the spirit and scope of the embodiments of the present invention as defined in the appended claims.

The scope of the present invention is not limited to any of the described embodiments but is solely defined by the appended claims and their equivalents.

**Claims**

1. A method of operating a transmitter in a heterogeneous wireless network, the method comprising:

determining a transmission rate of each of a plurality of subflows, where each subflow corresponds to a wireless network interface; and
transmitting traffic through the subflows,
wherein the transmission rate of each of the subflows is determined in consideration of (i) a transmission rate per unit time from an upper layer to a transport control protocol (TCP) layer and (ii) a capacity in which a bottleneck link can accept, and the transmission rates are determined starting with the subflow having the highest priority of the plurality of subflows.

2. The method of claim 1, wherein determining the transmission rate comprises:

estimating the capacity in which the bottleneck link can accept and the transmission rate per unit time from the upper layer to the TCP layer;
calculating, for each of the subflows, a maximum transmission rate based on the estimated capacity in which the bottleneck link can accept and a minimum transmission rate of each of the subflows based on the estimated transmission rate per unit time from the upper layer to the TCP layer; and
allocating a corresponding maximum transmission rate to each subflow in sequence from the subflow having the highest priority to the subflow having the lowest priority.

3. The method of claim 2, wherein the transmission rate per unit time from the upper layer to the TCP layer is estimated by the following:

$$\tilde{f}'_k = \frac{b_k \quad b_{k-1}}{\Delta t} + \sum_{s \in S} x_{s,k-1}.$$

w$\tilde{f}_k = \frac{b_k - b_{k-1}}{\Delta t} + \sum_{s \in S} x_{s,k-1}$ here $x_{s,k-1}$ is a transmission rate in a (k-1)th time

slot of subflow s, $b_{k-1}$ is a quantity of backlogged packets stacked in a send buffer of the transmitter in a (k-1)th time slot, and $b_k$ is a quantity of backlogged packets stacked in the send buffer of the transmitter in a kth time slot.

4. The method of claim 2, wherein the capacity for a bottleneck a link can accept is estimated by the following:

$$\tilde{c}_{s,k+1} = c_{s,k} = \frac{x_{s,k} RTT_{s,k}}{RTT_{s,k} - RTT_s^{min}}.$$

where $\tilde{c}_{s,k+1} = c_{s,k} = \frac{x_{s,k} RTT_{s,k}}{RTT_{s,k} - RTT_s^{min}} \tilde{c}_{s,k+1}$ is the estimated bottleneck link

capacity of subflow s, $RTT_{s,k}$ is a round trip time of subflow s in a kth time slot, $RTT_s^{min}$ is a minimum round trip time of subflow s, and $x_{s,k}$ is a transmission rate of subflow s in a kth time slot.

5. The method of claim 2, wherein the maximum transmission rate of each of the subflows is calculated using the following:

$$\overline{x}_s = \tilde{c}_{s,k} - \frac{M_s - 1 + \tilde{c}_{s,k} \cdot RTT_s^{min}}{2 \cdot d_{thr}^{net}}.$$

where $\tilde{c}_{s,k}$ is a bottleneck link capacity of subflow s, $(RTT_{s,k})$ is a round trip time of subflow s measured in a kth time slot, $M_s$ is the number of buffers through which a packet passes from the transmitter to a receiver, $RTT_s^{min}$ is a minimum round trip time of subflow s, and $d_{thr}^{net}$ is a threshold value of network delay.

6. The method of claim 2, wherein the minimum transmission rate based on the estimated transmission rate per unit time from the upper layer to the TCP layer is calculated by the following :

$$\left[\sum_{s\in S} x_{s,k}\right] = \widetilde{f}_k + 1/d_{thr}^{send}$$

.

where $\widetilde{f}_k$ is the estimated transmission rate per unit time from the upper layer to

the TCP layer, and $d_{thr}^{send}$ is a threshold value for a delay in a send buffer within the transmitter.

7. An apparatus of a transmitter for a heterogeneous wireless network, the apparatus comprising:

a plurality of network interfaces, each network interface transmitting a subflow corresponding to a wireless network; and
a controller that determines a transmission rate of each of the subflows and controls the plurality of network interfaces to transmit traffic via the subflows according to the determined transmission rates,
wherein the controller determines the transmission rate of each of the subflows in consideration of (i) a transmission rate per unit time from an upper layer to a transport control protocol (TCP) layer and (ii) a capacity in which a bottleneck link can accept, and the transmission rates are determined starting with the subflow having the highest priority of the plurality of subflows.

8. The apparatus of claim 7, wherein the controller estimates the capacity in which the bottleneck link can accept and the transmission rate per unit time from the upper layer to the TCP layer; calculates, for each of the subflows, a maximum transmission rate based on the estimated capacity in which the bottleneck link can accept and a minimum transmission rate based on the estimated transmission rate per unit time from the upper layer to the TCP layer; and determines the transmission rate of each of the subflows by allocating a corresponding maximum transmission rate to each subflow in sequence from the subflow having the highest priority to the subflow having the lowest priority.

9. The apparatus of claim 8, wherein the controller estimates a transmission rate per unit time from the upper layer to the TCP layer by the following:

$$\widetilde{f}_k = \frac{b_k - b_{k-1}}{\Delta t} + \sum_{s\in S} x_{s,k-1}$$

.

$\mathrm{w}\widetilde{f}_k = \frac{b_k - b_{k-1}}{\Delta t} + \sum_{s\in S} x_{s,k-1}$ here $x_{s,k-1}$ is a transmission rate in a (k-1)th time
slot of subflow s, $b_{k-1}$ is a quantity of backlogged packets stacked in a send buffer of the transmitter in a (k-1)th time slot, and $b_k$ is a quantity of backlogged packets stacked in the send buffer of the transmitter in a kth time slot.

10. The apparatus of claim 8, wherein the controller estimates the capacity in which the bottleneck link can accept by using the following:

$$\widetilde{c}_{s,k+1} = c_{s,k} = \frac{x_{s,k} RTT_{s,k}}{RTT_{s,k} - RTT_s^{min}}$$

.

where $\widetilde{c}_{s,k+1} = c_{s,k} = \frac{x_{s,k} RTT_{s,k}}{RTT_{s,k} - RTT_s^{min}} \widetilde{c}_{s,k+1}$ is the estimated bottleneck link

capacity of subflow s $RTT_{s,k}$ is a round trip time of subflow s in a kth time slot, $RTT_s^{min}$ is a minimum round trip time of subflow s, and $x_{s,k}$ is a transmission rate of subflow s in a kth time slot.

11. The apparatus of claim 8, wherein the controller calculates the maximum transmission rate of each of the subflows by using the following:

$$\overline{x}_s = \widetilde{C_{s,k}} - \frac{M_s - 1 + \widetilde{c_{s,k}} \cdot RTT_s^{min}}{2 \cdot d_{thr}^{net}} \quad ..$$

where $\widetilde{C_{s,k}}$ is the estimated bottleneck link capacity of subflow s, $RTT_{s,k})$ is the round trip time of subflow s measured in a kth time slot, $M_s$ is the number of buffers through which a packet passes from the transmitter to a receiver, $RTT_s^{min}$ is a minimum round trip time of subflow s, and $d_{thr}^{net}$ is a threshold value for the network delay.

**12.** The apparatus of claim 8, wherein the controller calculates a minimum transmission rate based on a transmission rate per unit time from the upper layer to the TCP layer by using the following:

$$\left\lfloor \sum_{s \in S} x_{s,k} \right\rfloor = \widetilde{f}_k + 1/d_{thr}^{send}$$

where $\widetilde{f}_k$ is a transmission rate per unit time from the upper layer to the TCP layer, and $d_{thr}^{send}$ is a threshold value for a delay in a send buffer within the transmitter.

**13.** The method of claim 2 or the apparatus of claim 8, wherein the sum of maximum transmission rates of each of the subflows is larger than the minimum transmission rate.

**14.** The method of claim 2 or apparatus of claim 8, wherein high priority is given to a subflow having a small network cost.

EP 2 899 929 A1

TRANSMITTER (100)

110
APPLICATION LAYER

Traffic rate : f(t)

120
SEND BUFFER

130
CONGESTION CONTROLLER

141 SUB-FLOW 1

142 SUB-FLOW 2

143 SUB-FLOW 3

144 SUB-FLOW N

Tx rate by CC : $X_s^{cw}(t)$

RECEIVER (200)

210
APPLICATION LAYER

220
REORDERING BUFFER

231 SUB-FLOW 1

232 SUB-FLOW 2

233 SUB-FLOW 3

234 SUB-FLOW N

FIG.1

$100$

**APPLICATION LAYER** /110

Traffic rate : $f(t)$

**SEND BUFFER** /120

**CONGESTION CONTROLLER** /130

Backlogged data : $b(t)$    Tx rate by CC : $X_s^{cw}(t)$

**MPTCP TRAFFIC CONTROLLER** /150

**SEND BUFFER MONITOR** /160

**SUBFLOW CAPACITY MONITOR** /170

**END-TO-END DELAY ESTIMATOR** /180

Subflow's RTT : $RTT_s(t)$

**TRAFFIC DISTRIBUTION CONTROLLER** /190

**SUB-FLOW 1** /141    **SUB-FLOW 2** /142    **SUB-FLOW 3** /143    **SUB-FLOW N** /144

Tx rate : $X_s(t)$

**FIG.2**

13

FIG.3

START

ESTIMATE TRAFFIC RATE AND
CAPACITY OF SUBFLOWS  ~S110

CALCULATE MAXIMUM
TRANSMISSION RATE OF EACH
SUBFLOW  ~S120

ALLOCATE TRANSMISSION RATE IN
ORDER IN WHICH NETWORK COST
IS SMALL UNTIL SEND BUFFER
DELAY BECOMES SMALLER THAN
THRESHOLD VALUE  ~S130

END

FIG.4

START

ESTIMATE TRAFFIC RATE $\tilde{f}_k$  — S205

ESTIMATE CAPACITY $\tilde{C}_{s,k}$ OF SUBFLOW  — S210

CALCULATE MAXIMUM TRANSMISSION RATE $\overline{X}_s$ OF EACH SUBFLOW  — S215

CALCULATE REQUIRED ENTIRE TRANSMISSION RATE
$$\left| \sum_{s \in S} X_{s,k} \right|$$
— S220

SET REQUIRED ENTIRE TRANSMISSION RATE $\left| \sum_{s \in S} X_{s,k} \right|$ TO T AND SET TRANSMISSION RATE OF ENTIRE SUBFLOW TO 0  — S225

SELECT SUBFLOW HAVING HIGHEST PRIORITY  — S230

$$X_{s,k} = \min\{\overline{X}_s, T, X_{s,k}^{cw}\}$$  — S235

$$T \leftarrow T - X_{s,k}$$  — S240

S245  $T > 0$ ?  YES → SELECT SUBFLOW OF NEXT PRIORITY  S250

NO

END

FIG.5

Europäisches
Patentamt

European
Patent Office

Office européen
des brevets

# EUROPEAN SEARCH REPORT

Application Number

EP 15 15 2562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2013/077501 A1 (KRISHNASWAMY DILIP [US] ET AL) 28 March 2013 (2013-03-28)<br>* abstract *<br>* figure 3 *<br>* paragraphs [0007], [0011], [0015] *<br>* paragraph [0040] - paragraph [0045] *<br>* paragraph [0054] - paragraph [0059] *<br>* paragraph [0069] - paragraph [0077] *<br>----- | 1,2,7,8,<br>13,14<br>3-6,9-12 | INV.<br>H04L12/707<br>H04L12/801 |
| A | CHRISTOPH PAASCH ET AL: "Experimental evaluation of multipath TCP schedulers", PROCEEDINGS OF THE 2014 ACM SIGCOMM WORKSHOP ON CAPACITY SHARING WORKSHOP, CSWS '14,<br>1 January 2014 (2014-01-01), pages 27-32, XP055196001,<br>New York, New York, USA<br>DOI: 10.1145/2630088.2631977<br>ISBN: 978-1-45-032991-0<br>* abstract *<br>* Sections 1-3 *<br>----- | 1-14 | |
| A | Anonymous: "RFC 6824 - TCP Extensions for Multipath Operation with Multiple Addresses",<br>,<br>1 January 2013 (2013-01-01), XP055195765,<br>Retrieved from the Internet:<br>URL:https://tools.ietf.org/html/rfc6824<br>[retrieved on 2015-06-15]<br>* abstract *<br>* Section 3.3.5, 3.3.7, 3.3.8 *<br>----- | 1-14 | TECHNICAL FIELDS SEARCHED (IPC)<br><br>H04L |

The present search report has been drawn up for all claims

| Place of search | Date of completion of the search | Examiner |
|---|---|---|
| The Hague | 17 June 2015 | Clemente Lafuente, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 15 2562

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2015

| Patent document cited in search report | Publication date | Patent family member(s) | Publication date |
|---|---|---|---|
| US 2013077501 A1 | 28-03-2013 | CN 103918304 A | 09-07-2014 |
| | | EP 2759164 A1 | 30-07-2014 |
| | | JP 2014530564 A | 17-11-2014 |
| | | KR 20140077936 A | 24-06-2014 |
| | | US 2013077501 A1 | 28-03-2013 |
| | | WO 2013043506 A1 | 28-03-2013 |

EPO FORM P0459

For more details about this annex : see Official Journal of the European Patent Office, No. 12/82